## Europäisches Patentamt

## European Patent Office

## Office européen des brevets

(11) Veröffentlichungsnummer: **0 126 787**
**A1**

(12) **EUROPÄISCHE PATENTANMELDUNG**

(21) Anmeldenummer: 83105219.6

(22) Anmeldetag: 26.05.83

(51) Int. Cl.³: **B 29 C 27/02**
**B 23 K 26/00**

(43) Veröffentlichungstag der Anmeldung:
05.12.84 Patentblatt 84/49

(84) Benannte Vertragsstaaten:
BE DE FR GB IT NL

(71) Anmelder: **Tjaden, Jan**
**Vorwaldstrasse 41**
**D-8968 Durach(DE)**

(72) Erfinder: **Tjaden, Jan**
**Vorwaldstrasse 41**
**D-8968 Durach(DE)**

(54) Verfahren zum Laserschweissen und hierfür optimierter Kunststoff.

(57) Bei diesem Verfahren wird die Wechselwirkung zwischen der eingestrahlten Laserenergie und der Absorption im thermoplastischen Material optimiert. Es werden geeignete Additive genannt, um die Umwandlung der Laserstrahlung in Wärme im Polymer zu intensivieren und durch Metallschuppen eine Mehrfachreflexion mit jeweiliger Absorption innerhalb des Kunststoffs zu erzielen. Die Folienführung beim Verschweißen erfolgt in der Weise, daß in einer Vorwärmzone die schwächere Energieintensität mit dem Außenbereich des Strahlenkegels teilweise normal, bei Annäherung an den heißen Strahlenkern jedoch zunehmend tangential mit Tiefenwirkung auftrifft. Die Kombination dieser Maßnahmen bewirkt eine nahezu vollständige Extinktion der eingestrahlten Energie, so daß sich das Verfahren besonders für die kontinuierliche Verschweißung von bahnenförmigen Kunststoffen eignet.

Fig.1

<u>Verfahren zum Laserschweißen und hierfür optimierter
Kunststoff</u>.

Die Erfindung betrifft ein Schweißverfahren nach dem
Oberbegriff des Anspruchs 1.

Es gibt in der Verarbeitung von Kunststoff-Filmen
viele Anwendungen, die flächige, dichte Nähte mit
hoher Festigkeit voraussetzen. Solche Verbindungen
werden hauptsächlich im Wärmeimpuls- und Wärmekontaktverfahren erzeugt. Bei beiden wird von außen
durch die aufeinanderliegenden Folien solange Wärme
zugeführt, bis in der dazwischenliegenden Fügefläche
die Schweißtemperatur erreicht ist. Die Arbeitsgeschwindigkeit ist also durch die geringe Wärmeleitfähigkeit des Schweißgutes begrenzt. Um den Temperaturgradienten steigern zu können, kaschiert man vielfach die Folien mit einer dünnen Polyesterschicht
höherer Temperaturfestigkeit oder belegt die Siegelbacken mit Teflon-Glasseide, wodurch ein Ankleben und
Aufbauen der plastifizierten Monofolie verhindert
wird. Die erzielte Verkürzung der Schweißzeit rechtfertigt diesen zusätzlichen Aufwand. Jedoch haben die
Wärmeimpuls- und Wärmekontaktverfahren damit die physikalische Grenze einer Geschwindigkeitssteigerung
erreicht.

Es ist deshalb versucht worden, die Wärmeleitfähigkeit von Kunststoffen durch Zugabe stärker leitender
Füllstoffe zu steigern. Eine merkliche Verbesserung
ergibt sich jedoch erst bei höchstmöglicher Beimengung, die wiederum andere unerwünschte physikalische
Veränderungen des Systems nach sich zieht, beispielsweise die Dehnfestigkeit verringert.

Als Energiequelle zum Schweißen von Kunststoffen wird
in der DE-OS 16 29 219 ein He-Ne Laser beschrieben, dessen Wellenlänge bei einem Absorptionspeak des Kunststoffs liegt. Derartige Laser sind für den angestrebten Zweck jedoch völlig ungeeignet, da sie nur sehr geringe Leistungen bringen.

Aus der DE-AS 2826 856 derselben Anmelderin ist bekannt, den beim Trennschweißen von zwei dünnen Folien hindurchtretenden, sonst verlorenen Großteil der Laserstrahlung dadurch besser auszunutzen, daß mit nachgeschalteten Elementen der Laserstrahl wiederholt von außen durch den Schweißnahtbereich reflektiert wird. Wegen sich summierender Reflexionsverluste und Streuung sind homogene, dichte Nähte mit diesem Verfahren nicht zu erzielen.

Aus der DE-OS 26 47 082 ist ein Verfahren bekannt, über gegenläufige Walzen zwei Metallbänder so zusammenzuführen, daß durch einen im Walzenspalt auftreffenden Laserstrahl beide Bänder miteinander verschweißt werden. Damit wird die Tatsache genutzt, daß die Oberfläche der Metallbänder die Strahlung weitgehend absorbiert und als Wärme schnell in den Nahtbereich weiterleitet. Dieses Verfahren wäre bei Kunst stoffen unwirtschaftlich langsam, da diese schlechte Wärmeleiter sind und beispielsweise das meistgebräuchliche Polyäthylen nur einen Bruchteil der Einstrahlung eines $CO_2$-Lasers absorbiert.

Der Erfindung liegt die Aufgabe zugrunde, die Schweißgeschwindigkeit von Kunststoff-Folien wesentlich zu erhöhen und die Wechselwirkung zwischen Laserstrahlung und Schweißgut dadurch zu optimieren, daß mehrere Strahlen ausgekoppelt oder durch Strahlenteilung gebildet, gebündelt und sowohl zeitlich als auch räumlich so gesteuert werden, daß die Ausbildung der Nähte nach Schweißtiefe und -breite, sowie Abstand voneinander

und Verlauf (Muster) variiert werden kann, die Schweiß-vorrichtung derart gestaltet ist, daß die Folien entlang dem Intensitätsprofil der Strahlen konvergieren, die Schweißgeschwindigkeit mit dem Ziel homogener, fester und wasserdichter Nähte zu steuern und den Kunststoff durch geeignete Additive so zu modifizieren, daß eine möglichst verlustlose Umwandlung der eingestrahlten Energie in Schmelzwärme erzielt wird.

Diese Aufgabe wird bei einem gattungsgemäßen Verfahren durch die kennzeichnenden Merkmale des Anspruchs 1 gelöst.

Für die ökonomische Ausnutzung der Laserenergie stellten sich in Versuchen besonders Polyäthylene wegen ihres weiteren Schmelzbereichs gegenüber andren Thermoplasten für automatischen Betrieb als geeignet heraus. Mit Additiven, für die im Laserwellenbereich ein Absorptionspeak ermittelt wurde, wie anorganische Mineralien und Industrieprodukte, wird die geringe Eigenabsorption des Polyäthylens verstärkt. Es gelang durch das Einarbeiten von reflektierenden Metallpartikeln in das thermoplastische Grundmaterial, eine Mehrfachreflexion der Einstrahlung innerhalb der Folie zu erzielen und damit wiederholte interne Absorption. Diese Maßnahmen, aber auch die Kombination von absorbierenden Füllstoffen mit reflektierenden Partikeln ergeben eine wesentlich bessere Ausnutzung der Laserstrahlung. Es wurde gefunden, daß schuppenförmiger Aluschliff be-sonders geeignet ist, weil über die Folienführung die Schichtung dieser Schuppen im Polymer der Strahlungsintensität angepaßt werden konnte.

Das entwickelte Verfahren ließ erstmalig die außerordentlich kostengünstige Herstellung eines Schlauches zu, der für Bewässerungszwecke verwendet wird.

Für dieses Einsatzgebiet ist eine oder beide den Schlauch bildenden Folien für den Wasseraustritt in Abständen gelocht. Das Verfahren ist aber nicht auf die Verbindung von zwei Folien beschränkt, es können eine weitere Bahn oder Abschnitte angebracht sein. Beispielsweise hat es sich als vorteilhaft erwiesen, die vorher angebrachten Löcher mit einer angehefteten überwölbenden Abschirmung zu versehen, damit Wasser nur sickernd austritt. Eine weitere Ausgestaltung der Erfindung sieht vor, daß mehrere parallel laufende Kammern mit Hilfe unterbrochener bis durchgehender Nähte gebildet sind. Für verschiedene Anwendungsfälle der Bewässerung mit spezifischem Wasserbedarf sind Löcher bestimmter Größe in definierten Abständen angeordnet und der geschweißte Schlauch in vorgegebenen Längen konfektioniert. Für Transport und vereinfachtes Auslegen des nach dem erfindungsgemäßen Verfahren hergestellten Bewässerungsschlauches hat sich das raumsparende Aufwickeln bewährt.

Die erfindungsgemäße Optimierung der Wechselwirkung zwischen Laserstrahlung und Polymer führte zu einem industriellen Schweißverfahren für thermoplastische Folien, dessen Schweißgeschwindigkeit die herkömmlicher Methoden um das Mehrfache übertrifft. Ein weiterer Vorteil liegt in der ausgeprägten Konstanz der Schweißnahtqualität. Die erreichte Dichtigkeit und der erzielte außergewöhnlich hohe Schweißfaktor d.h. das Verhältnis von Naht- zu Materialfestigkeit markieren einen deutlichen Fortschritt in der Schweißtechnologie. Die früher erforderliche Sicherheitszugabe in der Folienstärke und damit der Materialmehrverbrauch können bei Einsatz dieses Verfahrens beträchtlich zurückgenommen werden. Diese Vorteile der Erfindung ermöglichen nicht nur die Verbesserung bestehender, sondern auch die Schaffung neuer, zusätzlicher Produkte wie den vorstehend beschriebenen Bewässerungsschlauch.

Beispiele:

Um Mittel und Wege zu finden, die eine deutliche Verbesserung der Schweißgeschwindigkeit von dichten, festen Nähten bei sparsamem Energieeinsatz ergeben, waren sehr materialintensive, langwierige Versuchsreihen notwendig, die iterativ zur Problemlösung führten.

Beispiel 1

Die Problemstellung besteht in der Optimierung der Wechselwirkung zwischen Laserstrahlung und Schweißgut. $CO_2$-Laser arbeiten im Infrarot-Bereich bei 10,6 um. Der hohen Transmissionsrate des Polyäthylens in diesem Wellenlängenbereich wurde entgegengewirkt, indem der Kunststoff mit einem absorbierenden Additiv versehen bzw. eingefärbt wurde. Art und Anteil der Beimischung entsprechend, ist dadurch die Absorption verstärkt und die Transmission reduziert worden. Solche Pigmente, wofür unter anderen Kohlenstoffpulver geeignet ist, absorbieren die Strahlung und leiten die Wärmebewegung des umgebenden Materials ein. Raster-Elektronen-mikroskopische Untersuchungen zeigen, daß die Einbettung von Farbpigmenten aus Masterbatches oft unvollständig ist, so daß es an Agglomerationen zu Wärmestaus kommen kann. Diese verursachen lokale Depolymerisation; bei 335 bis $450^{o}$C verdampfende Abbauprodukte sprengen dann das zähflüssige Polymer aus dem Nahtbereich, woraufhin eine zuverlässige Verschweißung nicht mehr erwartet werden kann. Durch Verwendung von Furnace-Ruß geringer Partikelgröße, hoher spezifischer Oberfläche bis 1000 $m^2$/g und gleichmäßiger Verteilung im Polymer wurden diese Erscheinungen ausgeräumt. Mit 1%-iger Rußbeigabe konnte vergleichsweise die Transmission einer 250 µm LDPE-Folie im Laserwellenbereich auf 35% gedrückt werden.

Beispiel 2

Ein weiterer wirtschaftlicher Fortschritt ist aufbauend auf vorstehend beschriebener Weiterentwicklung des Laserschweißens durch die folgende Innovation erreicht worden. Ausgehend von der gewonnenen Erfahrung, daß auch die erzwungene Absorption der Laserstrahlung im gefärbten Material über Wärmeleitung noch nicht zur vollständigen Energieverwertung führt, sollte eine Problemlösung gefunden werden, die Wärmeübertragung durch Leitung zu vermeiden. Erfindungsgemäß wird die Folie daher durch reine Strahlungsenergie und deren Absorption im Grundmaterial verschweißt. Es sind dazu in das transparente Material feine Metallpartikel in gleichmäßiger Verteilung eingearbeitet, die den energiereichen Laserstrahl mit zunehmender Eindringtiefe mehr und mehr auffasern. Wenn die Dosierung richtig gewählt ist, geht kaum mehr Strahlung durch Transmission verloren. Vorzugs weise wird zu diesem Zweck dem Thermoplast feiner Aluschliff beigegeben, der bei der Extrusion zu Folie längs ausgerichtet wird. Damit ist eine größtmögliche Flächen deckung schon bei einem geringen Mischungsanteil zu erreichen. Die Alupartikel wirken als Streuzentren, da ihre Flächen einen ihrer Größe entsprechenden Bruchteil des Strahlenbündels ungerichtet in den als Bindemittel dienenden Kunststoff bis zum Auftreffen auf das nächste Partikel reflektieren usw. An Kanten werden die Strahlen gebrochen. Dieser Vorgang wiederholt sich solange, bis sich die Strahlung trotz der geringen Absorptionsfähigkeit der Thermoplastmoleküle im Nahtbereich sukzessiv totgelaufen hat. Die Verfahrensgeschwindigkeit wurde so eingestellt, daß die eingestrahlte Laserenergie durch die beschriebene Vielfachstreuung und Folienführung vollständige Extinktion erfährt und dabei die Masse bis zum Schmelzpunkt plastifiziert. Fügt man nun die derartig aufgeschmolzenen Nahtbereiche zweier Folien zusammen , so erhält man eine hervorragende Schweißverbindung.

Weitere Beispiele der erfindungsgemäß geführten Wechselwirkung zwischen Strahlung und Folie enthält folgende Tabelle:

| Folientyp | Stärke | Schweißverfahren | Leistung m/min |
|-----------|--------|------------------|----------------|
| PP | 200 µm | Wärmekontakt | 6 |
| PP, natur | 400 " | Lichtstrahl | 6 |
| PE | 200 " | Wärmekontakt | 8 |
| LDPE, natur | 200 " | Laser | 15 |
| LDPE, $TiO_2$ | 200 " | Laser | 19 |
| LDPE, schwarz | 300 " | Laser | 21 |
| LDPE, mit Alu | 300 " | Laser | 35 |
| MDPE, schwarz | 200 " | Laser | 24 |
| MDPE, schwarz und Alu | 2oo " | Laser | 32 |
| MDPE, mit Alu schwarz | 200 " | Laser | 46 |
| MDPE, mit Alu | 200 " | Laser | 60 |

Das Wirkungsprinzip ist also ein ganz anderes als durch Wärmeleitung von der Außenseite bei der herkömmlichen Verschweißung von thermoplastischen Stoffen. Gegenstand der Erfindung ist die Tiefenwirkung durch erhöhte Absorption der eingestrahlten Energie. Es wurden dazu mehrere Wege beschrieben: durch Verteilung von stark absorbierenden Fremdpartikeln im Gefüge des Kunststoffs und von jenen ausgehende dreidimensionale Wärmeleitung, durch Einbetten von Metallpartikeln, die eine Mehrfachreflexion mit fortschreitender Absorption bewirken sowie eine Kombination beider Maßnahmen. Die mehrfache Arbeitsgeschwindigkeit wird bei der Laserschweißung des erfindungsgemäß mit feinem Aluschliff ausgerüsteten, für die Laserstrahlung sonst weitgehend transparenten, Kunststoffs erreicht, weil die Durchwärmung des Nahtvolumens nicht mehr abgewartet werden muß, sondern das partielle Schmelzen des Polymers mit dem Auftreffen des Strahls spontan einsetzt und über die Einwirkstrecke andauert.

Da Energie wegen der geringen Wärmeleitfähigkeit der Thermoplaste nur langsam abfließt, regt die von den Streuzentren mehrfach reflektierte IR-Strahlung die Makromoleküle praktisch von allen Seiten gleichzeitig und unmittelbar zum Schwingen an. Die Temperaturbewegung erzeugt innerhalb von Millisekunden eine Schmelze im bestrahlten Bereich. Die erfindungsgemäße Einbettung von Streuzentren hat den Vorteil gegenüber früheren Versuchen, Folien mit Laserstrahlung zu schweißen, daß der Strahlengang vervielfältigt wird. Bis auf einen geringen Anteil an Remission an der Folienoberfläche kann also die volle Laserleistung in Schwingungsenergie d.h. Schmelzwärme umgesetzt werden: der Wirkungsgrad ist deshalb wesentlich höher. Die Aluminiumpartikel selbst absorbieren nur in geringem Maße Energie und leiten wenig Wärme an das Material ab.

Die Wirkungsweise der Erfindung ist in der Zeichnung dargestellt und wird im folgenden näher beschrieben. Es zeigen

Figur 1 die Intensitätsverteilung im Laserstrahl und dieser angepaßte Folienführung,

Figur 2 in perspektivischer Darstellung die Bündelung sowie räumliche und zeitliche Führung zweier Laserstrahlen und

Figur 3 ein typisches mit Hilfe des erfindungsgemäßen Verfahrens aus der optimierten Folie hergestelltes Produkt.

Mit der erfindungsgemäßen Steuerung des Verfahrens erreicht man also, daß auf der Vorwärmstrecke die schwächere IR-Strahlung im Mantel des Strahlenkegels auf die im Verhältnis zur Dicke großflächigen Metallschuppen auftrifft und in Richtung der Foliendicke fortlaufend aufgefasert und reflektiert wird. Auf dem Wege in die Fügeebene beeinflußt dann zunehmend tangential der heiße Kern das System. Der Strahlkern tritt auch noch im Walzenspalt hindurch, wobei nur die wenige Mikrometer dicken Seitenkanten der Partikel Streuung verursachen und übt seine Tiefenwirkung über mehrere Millimeter bis zur vollständigen Extinktion aus. Dabei wird der erforderliche Rest an Schmelzwärme erzeugt, begleitet von fortschreitender Reflexion zwischen den Schuppen. Auf dieser Schweißstrecke durchdringen die Schmelzen der Folien einander und geben auf der anschließenden Kühlstrecke ihre Wärme an das benachbarte Material bzw. an die Umgebungsluft und Bandführung ab.

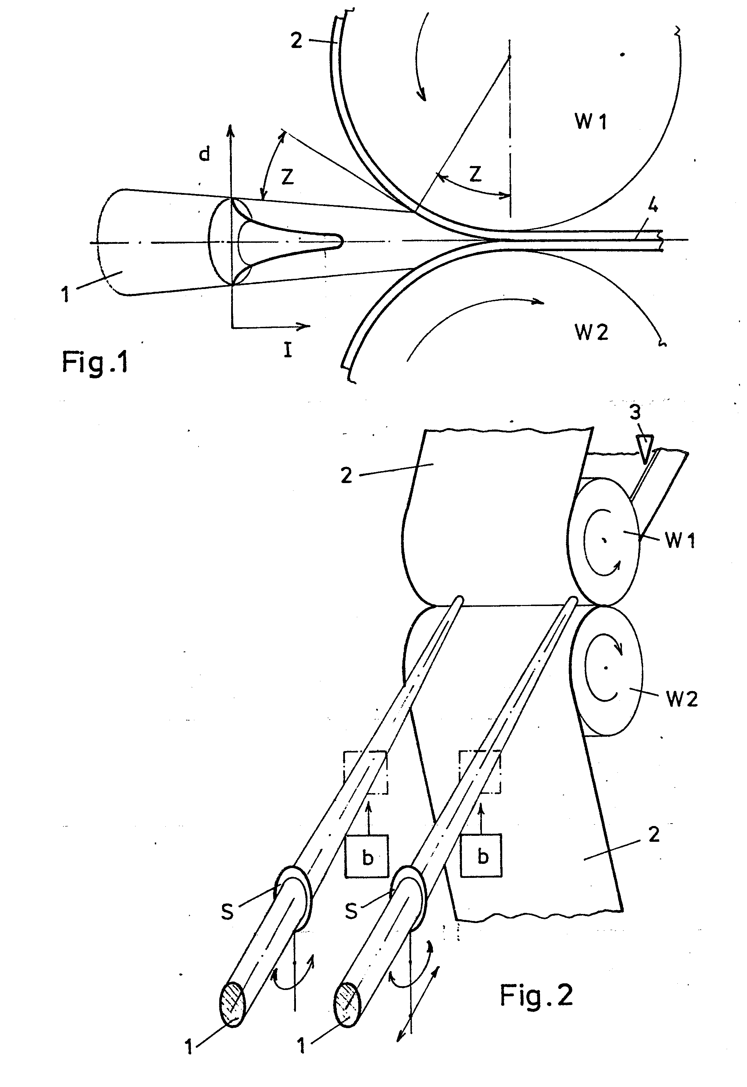

Der gebündelte Laserstrahl 1 in Figur 1 ist im Konvergenzbereich auf der Spalt zwischen den Walzen W1, W2 gerichtet, so daß er sich skispitzenförmig auf den beiden von den Walzen geführten Folien 2 abbildet. Auf diesen Hyperbelflächen werden die Folien vorgewärmt, bis sie auf ihrem weiteren Wege den heißen Kern einschließend auf der Schweißstrecke 4 zusammenlaufen.

Der Laserstrahl 1 weist über seinen Durchmesser d annähernd eine Verteilung der IR-Intensität I gemäß der Gauß'schen Glockenkurve auf d.h. bei einem schwachen Außenring eine hohe Energiedichte im Kern (cirka $10^7$ Watt/cm$^2$). Diesem Energieangebot steht ein hoher Bedarf an Schmelzwärme des Kunststoffs gegenüber. Um im Schmelzvorgang die Energieverteilung weitgehend auszunutzen, müssen ihr der Weg und die Verweildauer des Schweißgutes durch entsprechende Geometrie der Folienführung angepaßt werden.

Die vollständige Ausschöpfung der Laserleistung erfolgt aber erst, wenn auch die Absorption im Kunststoff dem Energieprofil entsprechend ansteigt. Dazu ist die mechanische Anordnung gemäß Figur 1 derart dimensioniert worden, daß sie die Kunststoffmoleküle mit den eingelagerten Partikeln z.B. Aluschliff im Einwirkungsbereich des Laserstrahls um den Zentri winkel Z dreht, d.h. gleichzeitig, daß der Auftreffwinkel des Laserstrahls mit den Folienbahnen auf diesem Umfangsweg von Z gegen Null im Walzenspalt geht.

In der Figur 2 ist als Beispiel eine Vorrichtung zum Verschweißen von Kunststoff-Bändern 2 mit Hilfe gebündelter Laserstrahlen dargestellt. Zwei Laserstrahlen 1 bilden mit ihren Achsen eine optische Ebene, in der die Bänder durch die Walzen W1, W2 zusammengeführt werden. Die Walzen sind zwischen den Sammellinsen S und ihren Brennpunkten im konvergenten Bereich angeordnet. Durch Verändern des Abstands zwischen den Sammellinsen und der Abbildung der Strahlen im Walzenspalt werden Nahtbreite und Schweißtiefe je nach Anforderungen eingestellt, der Abstand der Nähte voneinander ist durch Drehen der Linsen zu regulieren. Die Walzendurchmesser sind dem Querschnitt und der Intensitätsverteilung im Strahl derart angepaßt, daß die Folien 2 im Einwirkungs bereich des gebündelten Strahls erst eine Vorwärmzone durchlaufen, bevor sie in der optischen Ebene zwischen den Walzen miteinander verschweißt werden. Mit Hilfe von undurchlässigen Blenden b können der Strahlengang und damit die fortlaufenden Nähte unterbrochen werden, wenn z.B. für Bewässerungsschläuche Wasserauslässe benötigt werden. Zum seitlichen Nahtversatz durch nur zeitweiliges Auseinanderrücken, verbunden mit Unterbrechungen der Nähte sind die Linsen ebenfalls geeignet. Verschiedenartige Nahtmuster lassen sich so herstellen.

Da die Laserstrahlung mit einer Wellenlänge von 10,6 um nicht sichtbar ist, werden die zum Schweißen benötigten Elemente wie Umlenkspiegel, Strahlenteiler , Linsen S und Walzen im Probelauf mit Folie dem Schweißergebnis entsprechend justiert. Da aber industrielle Massenprodukte wie extrudierte Folien Dickenschwankungen aufweisen, erhielt die in Figur 2 vereinfacht dargestellte Schweißeinrichtung berührungslos arbeitende Temperaturfühler 3 , die mehrere Regeleinrichtungen ansteuern. Durch Vergleich der Wärmeabstrahlung der Nähte wird beim ersten Abgleich die optische Ebene 4 fixiert. Temperaturunterschiede zwischen Ober- und Unterseite der Nähte signalisieren Dickenunterschiede der Folien, worauf mit vertikalem Nachstellen der Walzen reagiert wird. Ein optimales Schweißergegnis soll fortlaufend sichergestellt werden. Es liegt vor bei gleich starker Abstrahlung aller vier Nahtoberflächen. Auch dieser Wert wird elektronisch mit dem gespeicherten Kennfeld der Maschinensteuerung verglichen und z.B. bei steigender Tendenz (wegen höherer Laserleistung) die Schweißgeschwindigkeit erhöht.

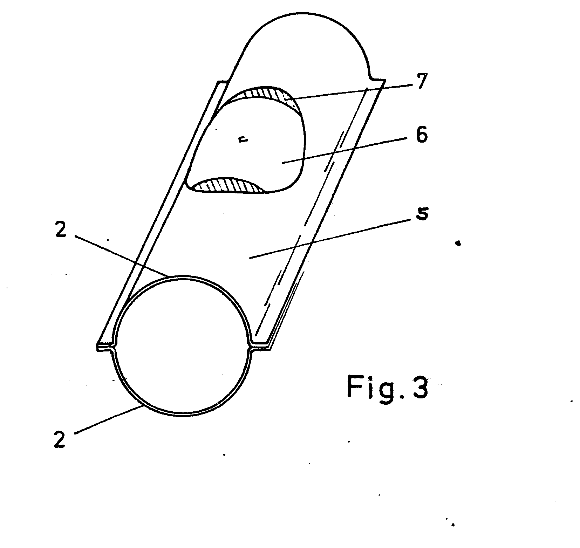

Der in Figur 3 dargestellte Bewässerungsschlauch 5 veranschaulicht wie das erfindungsgemäße Verfahren eingesetzt werden kann. Basierend auf dieser Ausführungsform sind vielfache Varianten, auch mit mehreren Kammern und unterbrochenen Nähten, denkbar. Der Schlauch 5 besteht aus zwei an sich gleichartigen Bändern 2 aus Kunststoff, von denen in dieser Ausführungsform eines in Abständen gelocht und mit einem schirmartigen Folienabschnitt 6 versehen ist. Diese Abdeckung bewirkt, daß aus dem Loch spritzendes Wasser nur tropfend abgegeben wird. Die Abdeckung 6 kann aufgeklebt oder im schraffierten Bereich 7 aufgesiegelt sein.

Patentansprüche

1. Verfahren und Folie zum Verschweißen von bandförmigem Material mit Laserenergie, wobei mindestens ein gebündelter Laserstrahl in die Fügeebene zweier zwischen Walzen zusammenlaufenden, zu verschweißenden Kunststoffbahnen gerichtet ist, dadurch gekennzeichnet,daß

a) der Kunststoff eine thermoplastische Folie ist,

b) in den Kunststoff eingearbeitete Zuschlagstoffe die Umwandlung der eingestrahlten Laserenergie in Schmelzwärme verbessern,

c) die Kunststoff-Folien der Intensitätsverteilung im Laserstrahl entsprechend mit sich änderndem Einfallswinkel von teilweiser normaler Einstrahlung am Rande des Strahlenkegels bis zu tangentialer Einstrahlung im Kern des Strahls geführt werden,

d) der oder die Strahlen räumlich und zeitlich steuerbar sind,

e) die Walzen in ihrem Abstand zueinander und zur optischen Ebene verstellbar sind,

f) die Wärmeabstrahlung einer oder mehrerer Nähte an mindestens einer Oberfläche zur Steuerung der Schweißgeschwindigkeit herangezogen wird,

g) die Geschwindigkeit des Folientransports geregelt wird

h) die verschweißten Folien im direkten Anschluß an den Schweißvorgang abgekühlt und weiterverarbeitet werden.

2. Folie nach Anspruch 1, dadurch gekennzeichnet, daß vorzugsweise Polyolefine, insbesondere mitteldichte Polyäthylene eingesetzt werden.

3. Folie nach Patentanspruch 1, dadurch gekennzeichnet, daß in den Kunststoff im Laserwellenlängenbereich absorbierende Partikel eingearbeitet sind, wie $SiO_2$ $TiO_2$, $CaCO_3$, $Al_2O_3$ oder Ruß.

4. Folie nach Patentanspruch 1, dadurch gekennzeichnet, daß in das Basismaterial die Strahlung reflektierende Metallpartikel eingearbeitet sind.

5. Folie nach Patentanspruch 4, dadurch gekennzeichnet, daß diese Metallpartikel schuppenförmig gestaltet und mit ihrer größten Erstreckung in Laufrichtung der Folienbahn ausgerichtet sind.

6. Folie nach Patentanspruch 4, dadurch gekennzeichnet, daß bei Polyäthylen 2 Gewichtsprozent schuppenförmiger Aluschliff eingesetzt ist.

7. Verfahren und Folie nach Patentanspruch 1, dadurch gekennzeichnet, daß zwei mit Metallschuppen durchsetzte Folien in einem Walzenspalt so zusammengeführt werden, daß sie den Strahl umschließen und ein seitliches Austreten des Strahls durch fortlaufende Reflexion aufeinander verhindern.

8. Verfahren und Folie nach Patentanspruch 1, dadurch gekennzeichnet, daß die in den Kunststoff eingearbeiteten Metallschuppen zu Beginn der Strahleinwirkung die Transmission reduzieren und die eingestrahlte Energie aufeinander reflektieren, anschließend aber dem dann tangential eintretenden Strahl nur noch die geringe Dicke entgegenstellen.

9. Verfahren nach Patentanspruch 1, dadurch gekennzeichnet, daß Folien mit Hilfe zweier zeitweilig unterbrochener bis fortwährend wirksamer Strahlen zu einer schlauchartigen Bahn verbunden werden.

10. Verfahren nach Patentanspruch 1, dadurch gekennzeinet, daß

a) eine oder beide Folienbahnen in Abständen gelocht werden,

b) die verschweißten Folien mit einer weiteren
Bahn oder Abschnitten verbunden werden,

c) schlauchartige Bahnen mit parallelen Kammern
und streckenweise unterbrochenen Nähten gebildet werden,

d) die verschweißten Bänder in einstellbare Längen geschnitten werden und

e) das geschweißte Produkt aufgewickelt wird.

Fig.1

Fig.2

Fig.3

Europäisches
Patentamt

**EUROPÄISCHER RECHERCHENBERICHT**

Nummer der Anmeldung

EP 83 10 5219

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-1 479 239 (FARBWERKE HOECHST AG) * Beispiel 3; Anspruch 5 * | 1-3 | B 29 C 27/02<br>B 23 K 26/00 |
| A | AT-B- 289 377 (WINDMÖLLER & HÖLSCHER) * Seite 2, Zeilen 4-8, 15-21, 49-54; Figur * | 1,2,9 | |
| A | US-A-3 596 045 (K.-H. STEIGERWALD et al.) * Spalte 1, Zeilen 25-30; Spalte 2, Zeilen 18-26 * | 1 | |
| A | Patent Abstracts of Japan Band 5, Nr. 193, 9. Dezember 1981 & JP-A-56-114590 | 1 | |
| A,D | DE-A-2 647 082 (UNION CARBIDE CORP.) * Seite 9, Zeilen 1-14; Seite 12, Zeilen 25-27; Figur 1 * | 1 | RECHERCHIERTE SACHGEBIETE (Int. Cl. ³)<br><br>B 29 C 27/00<br>B 23 K 26/00 |
| A | US-A-3 974 016 (V.E. BONDYBEY) * Zusammenfassung; Figur 1 * | | |
| A,D | DE-B-2 826 856 (WINDMÖLLER & HÖLSCHER) | | |
| A,D | DE-A-1 629 219 (WINDMÖLLER & HÖLSCHER) | | |

--- -/-

Der vorliegende Recherchenbericht wurde für alle Patentansprüche erstellt.

| Recherchenort<br>BERLIN | Abschlußdatum der Recherche<br>24-08-1983 | Prüfer<br>BRUCK |
|---|---|---|

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-1 465 204 (SIEMENS & HALSKE AG)<br><br>----- | | |

RECHERCHIERTE SACHGEBIETE (Int. Cl. 3)

Der vorliegende Recherchenbericht wurde für alle Patentansprüche erstellt.

| Recherchenort<br>BERLIN | Abschlußdatum der Recherche<br>24-08-1983 | Prüfer<br>BRUCK |
|---|---|---|